Europäisches Patentamt

European Patent Office

Office européen des brevets

(11) Veröffentlichungsnummer: **0 212 136 B1**

(12) **EUROPÄISCHE PATENTSCHRIFT**

(45) Veröffentlichungstag der Patentschrift: 05.06.91

(51) Int. Cl.5 **H01H 31/00**

(21) Anmeldenummer: 86108545.4

(22) Anmeldetag: 23.06.86

(54) Erdungsschalteranordnung für Hochspannungsanlagen.

(30) Priorität: 23.08.85 DE 3530196

(43) Veröffentlichungstag der Anmeldung:
04.03.87 Patentblatt 87/10

(45) Bekanntmachung des Hinweises auf die
Patenterteilung:
05.06.91 Patentblatt 91/23

(84) Benannte Vertragsstaaten:
AT CH DE FR LI

(56) Entgegenhaltungen:
EP-A- 0 070 794
DE-A- 2 628 020
FR-A- 2 444 354

(73) Patentinhaber: Concordia Sprecher Schaltgeräte GmbH
Industriestrasse 9
W-7024 Filderstadt 1(DE)

(72) Erfinder: Globig, Manfred
Bärenhofstrasse 24/2
W-7022 Leinfelden-Echterdingen 3(DE)

(74) Vertreter: Dipl.-Phys.Dr. Manitz Dipl.-Ing.,
Dipl.-W.-Ing. Finsterwald Dipl.-Ing. Grämkow
Dipl.-Chem.Dr. Heyn Dipl.-Phys. Rotermund
Morgan, B.Sc.(Phys.) Robert-Koch-Strasse 1
W-8000 München 22(DE)

## Beschreibung

Die Erfindung betrifft eine Erdungsschalteranordnung für Hochspannungsanlagen, insbesondere für auf Mehrfachsystemmasten verlegte Hochspannungsfreileitungen, mit den Stützisolatoren der einzelnen Phasen zugeordneten, mit einem Antrieb verbundenen Kontaktarmen, die erdseitig schwenkbar gelagert sind und denen hochspannungsseitig ein Festkontakt zugeordnet ist.

Es ist bekannt, daß auf Mehrfachsystemmasten verlegte Hochspannungsfreileitungen sich aufgrund induktiver und kapazitiver Kopplung gegenseitig beeinflussen.

Die Folge davon ist, daß in einem freigeschalteten System, dem ein weiterhin Strom führendes System benachbart ist, auch im abgeschalteten Zustand eine Spannung hervorgerufen wird. Diese Spannung hat wiederum zur Folge, daß beim Erden des freigeschalteten Systems im Erdungsschalter ein Stromfluß auftritt.

Die in der Regel relativ langsam betätigten Erdungsschalter werden demgemäß beim Einschalten durch einen Vorzündlichtbogen und beim Ausschalten durch einen Ausschaltlichtbogen einerseits und durch einen Dauerstrom andererseits beansprucht. Die Dauerstrombeanspruchung ist dabei in den meisten Fällen unproblematisch, aber die auftretenden Lichtbögen verursachen an den Kontakten häufig doch erhebliche Beschädigungen bzw. Störungen, deren Ausmaß von der Betriebsspannung und dem Strom des jeweils beeinflussenden Systems, von der Leitungslänge und vom Mastbild abhängig ist.

Messungen und theoretische Rechnungen haben ergeben, daß bei in Deutschland üblichen Netzen im beeinflußten System Spannungen in der Größenordnung bis zu etwa 30 kV und Ströme bis etwa 50 A entstehen können.

Es kann zwar versucht werden, durch spezielle Leitungsbelegung, Wahl bestimmter Mastbilder und dergleichen Extremwerte zu vermeiden, aber einerseits sind diese Maßnahmen nicht immer mit dem ausreichenden Erfolg verbunden, und andererseits lassen sich diese störenden Beeinflussungen vor allem bei großen Leitungslängen mit den herkömmlichen Maßnahmen nicht ausreichend beseitigen.

Aufgabe der Erfindung ist es daher, eine Erdungsschalteranordnung der eingangs angeführten Art so auszubilden, daß unabhängig von gegenseitigen Kopplungen zwischen benachbarten Systemen die jeweiligen Erdungsschalter beschädigungsfrei betätigt werden können, wobei der zu treffende technische Aufwand möglichst gering und die technische Realisierung vorzugsweise auch nachrüstbar sein soll.

Gelöst wird diese Aufgabe im wesentlichen dadurch, daß zu den einzelnen Kontaktarmen jeweils ein Schaltmesser eines Mittelspannungsschalters in Reihe geschaltet und eine Steuereinrichtung zur zeitlichen Verzögerung der Kontaktarmbetätigung bezüglich des Öffnungszeitpunktes des Mittelspannungsschalters und zur zeitlichen Verzögerung der Betätigung des Mittelspannungsschalters bezüglich des Schließzeitpunktes der Kontaktarme vorgesehen ist.

Durch die Reihenschaltung von Erdungs- und Mittelspannungsschalter sowie die gezielte zeitliche Steuerung wird sichergestellt, daß jeder Schalter die ihm zugeordneten Aufgaben ohne Beschädigungsgefahren erfüllen kann und die Gesamtanordnung somit einen sicheren Langzeitbetrieb gewährleistet.

Als Mittelspannungsschalter können beispielsweise Lastschalter, Last-Trennschalter oder auch Leistungsschalter eingesetzt werden, von denen lediglich zu fordern ist, daß sie hinsichtlich der Kurzschlußstrom-Tragfähigkeit entsprechende Werte aufweisen wie der jeweilige Hochspannungs-Erder.

Die Betätigung beider Schaltorgane kann entweder mittels getrennter Antriebe oder mittels eines gemeinsamen Antriebs vorgenommen werden, wobei im ersteren Falle die richtige zeitliche Reihenfolge der Betätigung durch entsprechende Steuerung sichergestellt werden muß, und im zweiten Fall die richtige Reihenfolge durch entsprechende Kupplungseinrichtungen zwangsläufig erreichbar ist.

Weitere vorteilhafte Merkmale der Erfindung sind in Unteransprüchen angegeben.

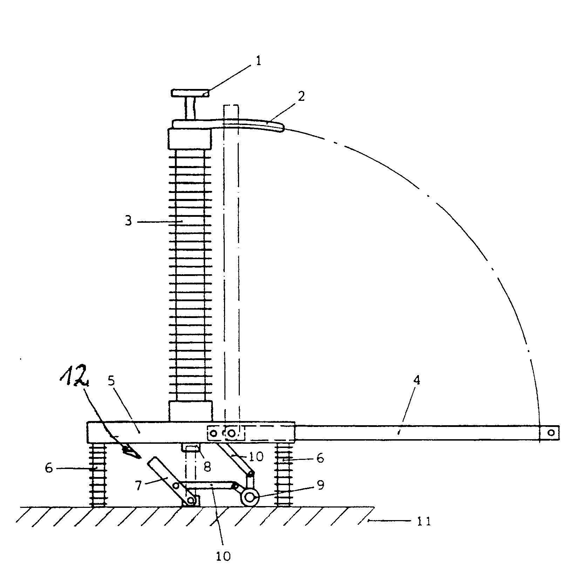

Ein Ausführungsbeispiel der Erfindung wird anhand der Zeichnung erläutert, deren einzige Fig. eine schematische Darstellung einer Erdungsschalteranordung nach der Erfindung zeigt.

Nach der Zeichnung ist auf einer Basis 11 über MittelspannungsStützisolatoren 6 ein Tragrahmen 5 angebracht, auf dem Hochspannungs-Stützisolatoren 3 vorgesehen sind.

Jeder Hochspannungs-Stützisolator 3 trägt einen Hochspannungsanschluß 1 und diesem benachbart einen festen Erdungskontakt 2. Dieser Erdungskontakt 2 wirkt zusammen mit einem beweglich gelagerten Erdungskontaktarm 4.

In dem dargestellten Ausführungsbeispiel ist der mit dem allgemeinen Bezugszeichen 12 gekennzeichnete Mittelspannungsschalter unterhalb des Tragrahmens 5 angeordnet und in Reihe zum Erder 2, 4 geschaltet.

Die Betätigung der mit Mittelspannungs-Festkontakten 8 zusammenwirkenden Mittelspannungs-Schaltmesser 7 erfolgt durch ein Sprungschaltwerk 9, das mit den Schaltmessern 7 über aus Isolierstoff bestehende Antriebsstangen 10 verbunden ist. Durch entsprechende Kupplungseinrichtungen wird die richtige Reihenfolge der Schalterbetätigung sichergestellt, und zwar dergestalt, daß beim Einschalten der Mittelspannungsschalter 12 erst eingeschaltet wird, wenn die Kontakte des Hochspannungserders 2, 4 geschlossen sind, und beim Ausschalten der Mittelspannungsschalter 12 ausschaltet, bevor die Kontakte 2, 4 des Hochspannungserders trennen.

**Ansprüche**

1. Erdungsschalteranordnung für Hochspannungsanlagen, insbesondere für auf Mehrfachsystemmasten verlegte Hochspannungsfreileitungen, mit den Stützisolatoren der einzelnen Phasen zugeordneten, mit einem Antrieb verbundenen Kontaktarmen (4), die erdseitig schwenkbar gelagert sind und denen hochspannungsseitig ein Festkontakt (2) zugeordnet ist,
dadurch **gekennzeichnet,**
daß zu den einzelnen Kontaktarmen (4) jeweils ein Schaltmesser (7) eines Mittelspannungsschalters (12) in Reihe geschaltet und eine Steuereinrichtung zur zeitlichen Verzögerung der Kontaktarmbetätigung bezüglich des Öffnungszeitpunktes des Mittelspannungsschalters (12) und zur zeitlichen Verzögerung der Betätigung des Mittelspannungsschalters (12) bezüglich des Schließzeitpunktes der Kontaktarme (4) vorgesehen ist.

2. Erdungsschalteranordnung nach Anspruch 1, dadurch **gekennzeichnet,** daß die Kontaktarme (4) und der Mittelspannungsschalter (12) jeweils getrennte Antriebe aufweisen.

3. Erdungsschalteranordnung nach Anspruch 1, dadurch **gekennzeichnet,** daß für die Kontaktarme (4) und den Mittelspannungsschalter (12) ein gemeinsamer Antrieb (9) vorgesehen und die Reihenfolge der Betätigung durch Kupplungseinrichtungen vorgegeben ist.

4. Erdungsschalteranordnung nach Anspruch 3, dadurch **gekennzeichnet,** daß der gemeinsame Antrieb von einem über Isolier-Antriebsstangen (10) mit den Kontaktarmen (4) und den Schaltmessern (7) verbundenen Sprungschaltwerk (9) gebildet ist.

5. Erdungsschalteranordnung nach einem der vorhergehenden Ansprüchen, dadurch **gekennzeichnet,** daß der Mittelspannungsschalter (12) erdseitig angeordnet ist.

6. Erdungsschalteranordnung nach Anspruch 5, dadurch **gekennzeichnet,** daß der Mittelspannungsschalter (12) unterhalb eines auf Mittelspannungsstützen (6) angeordneten Tragrahmens (5) für die Hochspannungs-Stützisolatoren vorgesehen ist.

7. Erdungsschalteranordnung nach einem der vorhergehenden Ansprüche, dadurch **gekennzeichnet,** daß als Mittelspannungsschalter (12) ein Lastschalter, Last-Trennschalter oder Leistungsschalter verwendet ist.

**Claims**

1. Earthing switch arrangement for high-tension installations, in particular for high-tension aerial lines placed on multiple system poles, comprising contact arms (4) associated to the support isolators of the individual phases and connected to a driving mechanism, the contact arms being pivotally mounted at the earth side and being associated to a fixed contact (2) at the high-tension side,
characterized in that
a switch blade (7) of a medium voltage switch (12) is connected in series with each of the individual contact arms (4) and that there is provided a control device for retarding the actuation of the contact arm with respect to the instant of opening of the medium voltage switch (12) and for retarding the actuation of the medium voltage switch (12) with respect to the instant of closure of the contact arms (4).

2. Earthing switch arrangement according to claim 1, characterized in that the contact arms (4) and the medium voltage switch (12) each comprise a separate driving mechanism.

3. Earthing switch arrangement according to claim 1, characterized in that a common drive mechanism (9) is provided for the contact arms (4) and for the medium voltage switch (12), and in that the succession of the actuation is predetermined by means of coupling devices.

4. Earthing switch arrangement according to claim 3, characterized in that the common driving mechanism is formed by a jump switch device (9) connected with the contact arms (4) and the switch blade (7) by means of isolating actuation rods (10).

5. Earthing switch arrangement according to one of the preceding claims, characterized in that the medium voltage switch (12) is arranged at the earth side.

6. Earthing switch arrangement according to claim 5, characterized in that the medium voltage switch (12) is provided below a carrier frame (5) for the high-tension supporting isolators, the carrier frame (5) being arranged on medium voltage supports (6).

7. Earthing switch arrangement according to one of the preceding claims, characterized in that a power circuit breaker, a load-break switch or a power switch is used as medium voltage switch (12).

**Revendications**

1. Disposition d'interrupteur de mise à la terre pour installations à haute tension, en particulier pour conducteurs aériens disposés sur des mâts multiples, comprenant des bras de contact (4) associés aux isolateurs de support des phases individuelles et reliés à un mécanisme de commande, lesdits bras de contact (4) étant montés pivotants côté terre et un contact fixe (2) étant associé au bras de contact côté haute tension, **caractérisée en ce qu** 'un couteau d'interrupteur (7) d'un commutateur à moyenne tension (12) est connecté en série à chacun des bras de contact (4) individuels et en ce qu'il est prévu un dispositif de commande pour retarder dans le temps l'actionnement du bras de contact par rapport à l'instant d'ouverture du commutateur à moyenne tension (12) et pour retarder dans le temps l'actionnement du commutateur à moyenne tension (12) par rapport à l'instant de fermeture du bras de contact (4).

2. Disposition d'interrupteur selon la revendication 1, caractérisée en ce que les bras de contact (4) et le commutateur à moyenne tension (12) possèdent chacun un mécanisme de commande séparé.

3. Disposition d'interrupteur selon la revendication 1, caractérisée en ce qu'il est prévu un mécanisme de commande (9) commun pour les bras de contact (4) et pour le commutateur à moyenne tension (12) et en ce que la séquence d'actionnement est prédéterminée par des dispositifs de couplage.

4. Disposition d'interrupteur selon la revendication 3, caractérisée en ce que le mécanisme de commande commun est formé par un dispositif à commutation brusque relié aux bras de contact (4) et aux couteaux d'interrupteur (7) au moyen de tiges d'actionnement isolées (10).

5. Disposition d'interrupteur selon l'une des revendications précédentes, caractérisée en ce que le commutateur à moyenne tension (12) est disposé côté terre.

6. Disposition d'interrupteur selon la revendication 5, caractérisée en ce que le commutateur à moyenne tension (12) est disposé au-dessous d'un cadre porteur (5) pour les isolateurs de support à haute tension, le cadre support (5) étant monté sur des supports à moyenne tension (6).

7. Disposition d'interrupteur selon l'une des revendications précédentes, caractérisée en ce qu'il est prévu un interrupteur à coupure en charge, un sectionneur à coupure en charge ou un disjoncteur pour coupure en charge en tant que commutateur à moyenne tension (12).